# EUROPÄISCHE PATENTSCHRIFT

(11) **EP 2 573 442 B1**
(45) Veröffentlichungstag und Bekanntmachung des Hinweises auf die Patenterteilung: **30.12.2015**
(21) Anmeldenummer: 11182525.3
(22) Anmeldetag: 23.09.2011
(51) Int. Cl.: F16L 55/165

(54) **Innenbeschichteter Liner**
Liner with internal coating
Revêtement interne

(43) Veröffentlichungstag der Anmeldung: 27.03.2013
(73) Patentinhaber: SAERTEX multiCom GmbH, 48369 Saerbeck (DE)
(72) Erfinder: Dr. Nils Füchtjohann, 48268 Greven (DE); Frank Mersmann, 48369 Saerbeck (DE); Barbara Solzbacher, 48565 Steinfurt (DE)
(74) Vertreter: Freischem & Partner Patentanwälte mbB

(56) Entgegenhaltungen:
- EP-A1- 0 863 359
- WO-A1-2010/111025
- DE-A1-102009 038 628
- DE-A1-102009 041 841
- US-A1- 2005 028 880

## Beschreibung

Die Erfindung betrifft einen imprägnierten Faserschlauch zur Innenauskleidung von Kanälen und Rohrleitungen, ein Verfahren zur Herstellung des Faserschlauchs, ein Verfahren zur Sanierung von Rohren sowie die Verwendung des Faserschlauchs zur Sanierung von Rohren.

Bislang wurden Rohre so saniert, dass sich in einem harzgetränkten -Glasfaserschlauch (Liner) eine polymere Schlauchinnenfolie befand, welche mittels Druckluft aufgestellt wurde, um den harzgetränkten Faserschlauch gegen die Rohrwand zu drücken. Anschließend wurde im Stand der Technik das Harz entweder durch UV-Bestrahlung oder durch Wärmeeinwirkung (Dampf, Warmwasser oder IR) ausgehärtet.

Bei der UV-Aushärtung wird in der Regel eine Vorrichtung durch den mit Druckluft aufgestellten Schlauch gezogen. Entweder hierbei oder schon zuvor beim Aufbinden der Packer kann es leicht zu Beschädigungen der polymeren Schlauchinnenfolie kommen. Ein Produktionsfehler bei der Herstellung der Schlauchinnenfolie kann ebenfalls nicht ausgeschlossen werden. Schon bei leichten Beschädigungen dringt Druckluft durch die Folie in den nur teilweise ausgehärteten Liner, wodurch zwangsläufig nach Abschluß der Aushärtung ein undichtes Endprodukt entsteht. Bei größeren Beschädigungen (z.B. Folienplatzern) fällt das ganze Produkt in sich zusammen und eine Aushärtung ist unmöglich. Diese Folienprobleme führen dazu, dass der ausgehärtete undichte Liner mühsam herausgefräst werden muss oder bei einem Folienplatzer der zusammengefallene Liner aus der Haltung gezogen und entsorgt werden muss. Beide Fälle führen zu einem erheblichen wirtschaftlichen Schaden.

WO 2010033297 A2 beschreibt ineinander geschobene oder übereinander gelegte harzgetränkte Faserschläuche. Auf der Innenseite kann eine polymere Schlauchfolie eingezogen sein. Diese polymere Schlauchinnenfolie kann zwischen 0,1 und 1 mm dick sein. Dieser Schlauch kann auch aus Polyamid bestehen. Der Schlauch kann an seinen Enden mit den jeweiligen Enden der Faserschläuche beispielsweise durch Vernähen verbunden sein. Dies hat den Nachteil, dass die bloße Folie lose in dem Faserschlauch eingelegt ist und dadurch immer noch leicht beschädigt werden kann.

DE 19924251 A1 beschreibt einen Folienschlauch, bei dem auf die Polymerfolie eine Schicht aus Vlies aufkaschiert ist. Dieser Folienschlauch ist außen um den eigentlichen Auskleidungsschlauch herum gelegt. Dieser außen liegende Folienschlauch stellt eine Armierung dar, die vor mechanischen Einflüssen der zu sanierenden Rohrinnenwand schützen soll. Auf der Innenseite wird wie im übrigen Stand der Technik eine polymere Schlauchinnenfolie eingezogen. Dieses System hat daher dieselben Nachteile wie der oben beschriebene Stand der Technik. In diesem Dokument wird auch erwähnt, dass sich diese innen liegende polymere Schlauchinnenfolie relativ zum Auskleidungsschlauch verschieben kann. Der in diesem Dokument beschriebene Auskleidungsschlauch ist nicht inversierfählg, da er aus einer gewickelten Glasfasermatte besteht und bei der Einstülpung in ein zu sanierendes Rohr im Inversionsverfahren auseinanderfallen würde. Da dieser Auskleidungsschlauch aus gewickelten Matten besteht, kann man weder eine Außenfolie noch eine Schlauchinnenfolie zuverlässig mit dem imprägnierten gewickelten Faserschlauch verbinden.

Im Stand der Technik ist es bisher nicht gelungen, die Schlauchinnenfolie so auszugestalten, dass sie weniger leicht verletzt werden kann und nach der Installation in dem Liner verbleiben könnte, was eine Optimierung des Prozesses auf der Baustelle darstellen würde, weil die Entnahme und Entsorgung der Schlauchinnenfolie entfallen würde.

Die Aufgabe der vorliegenden Erfindung besteht also darin, einen Faserschlauch zur Innenauskleidung von Kanälen und Rohrleitungen bereitzustellen, bei dem beim Aushärten Verletzungen der Schlauchinnenfolie besser vermieden werden können und die Folie nach der Aushärtung in dem Liner verbleiben kann, was eine Optimierung des Prozesses auf der Baustelle darstellen würde.

Die der Erfindung zu Grunde liegende Aufgabe wird in einer ersten Ausführungsform gelöst durch einen imprägnierten Faserschlauch zur Innenauskleidung von Kanälen und Rohrleitungen, der folgendes aufweist:
a. eine Außenschicht,
b. eine harzgetränkte Faserschlauchschicht,
c. eine Verankerungsschicht, und
d. eine innenliegende Polymerschicht mit mindestens einer Barrierelage,
und wobei die innenliegende Polymerschicht mindestens eine Längsnaht aufweist, und wobei die Dicke der Verankerungsschicht im Bereich von 30 bis 500 µm liegt.

Im Stand der Technik wird beispielsweise in EP1180225B1 beschrieben, dass ein Folienschlauch mit einer Verankerungsschicht kaschiert werden kann. Es hat sich jedoch herausgestellt, dass dies praktisch nicht zuverlässig möglich ist. Wenn nämlich ein Folienschlauch auf eine Verankerungsschicht aufgelegt wird und dann die Verankerungsschicht um den Folienschlauch herum gelegt wird, so kommt es bei der Kaschierung zumindest an den beiden Kanten zu unkaschierten Stellen. Diese unkaschierten Stellen ziehen sich den gesamten Schlauch entlang und können für eine Fehlfunktion beim Einbau des Liners sorgen.

Ein Dokument EP 0 863 359 A1 zum Stand der Technik offenbart eine Schichtdicke von 1-8 mm.

Bislang wurde eine Längsnaht bei der innenliegenden Polymerschicht oder Folie als nachteilig angesehen. Diese Längsnaht wurde bislang mit einer vorprogrammierten Schwachstelle im fertigen Produkt assoziiert. Die Erfinder haben jedoch in der vorliegenden Erfindung herausgefunden, dass die Verwendung von mindestens einer Längsnaht der innenliegenden Polymerschicht den Vorteil hat, dass dadurch eine flächige Polymerschicht mit beispielsweise einer Verankerungsschicht wie beispielsweise einem Vlies vorzugsweise verbunden und insbesondere vollflächig sehr zuverlässig aufkaschiert werden kann oder mit dem Vlies beispielsweise vollflächig zuverlässig verklebt werden kann. Anschließend kann die flächige Polymerschicht mit mindestens einer Längsnaht zu einem Schlauch umgeformt werden. Dies war mit den Folienschläuchen aus dem Stand der Technik bislang nicht möglich. Im Stand der Technik konnten Fehler bei der Kaschierung des Vlieses auf die Folie nicht verhindert werden.

Die Längsnaht der innenliegenden Polymerschicht kann beispielsweise durch eine Stoßfuge oder durch Überlappen gebildet sein. Die Längsnaht der innenliegenden Polymerschicht kann beispielsweise eine Schweißnaht sein. Die Längsnaht verläuft vorteilhafterweise in Schlauchrichtung.

Vorzugsweise sind zumindest die Verankerungsschicht c. und die innenliegende Polymerschicht d. stoffschlüssig oder kraftschlüssig miteinander verbunden.

Dadurch dass zumindest die Schichten c. und d. vorzugsweise miteinander stoffschlüssig oder kraftschlüssig verbunden sind, können diese Schichten sich im Unterschied zum Stand der Technik nicht relativ zueinander bewegen. Dadurch wird die Stabilität des gesamten Schichtaufbaus erheblich verbessert. Weiterhin erfährt die innenliegende Polymerschicht durch die damit verbundene Verankerungsschicht eine erhebliche Verstärkung, so dass die innenliegende Polymerschicht nicht mehr leicht verletzt werden kann.

Der erfindungsgemäße imprägnierte Faserschlauch ist vorzugsweise inversierfähig. Die bislang bekannten Faserschläuche wie beispielsweise aus EP1180225B1 sind nämlich nicht inversierfähig, da die harzgetränkte Faserschlauchschicht in den bislang bekannten Produkten meistens nur lose zusammen gelegt ist und daher bei einer Inversion auseinanderfällt. Der erfindungsgemäße imprägnierte Faserschlauch hat dadurch den Vorteil, dass das kostengünstigere Verfahren der Inversion mit diesem Faserschlauch durchgeführt werden kann.

Im Zusammenhang mit dem Inversionsverfahren wird darauf hingewiesen, dass sich der Aufbau des Liners vor der Installation für das Inversionsverfahren und für das Einzugsverfahren selbstverständlich unterscheidet. Die Abfolge der Schichten a. bis d. ist bei einem Liner für das Einzugsverfahren genauso wie die Schichten nach der Installation im Rohr angeordnet. Die Reihenfolge der Schichten vor der Installation bei einem Inversionsliner ist selbstverständlich genau umgekehrt (somit d. bis a.) zu der Schichtfolge nach der Installation. Da es sich um denselben Liner handelt, sind beide Varianten von dieser Erfindung umfasst. Es wird im Rahmen dieses Schutzrechtes die Nomenklatur a. bis d. verwendet, wobei sich versteht, dass der umgestülpte Liner (Abfolge d. bis a.) ebenfalls von der Erfindung umfasst ist.

Die einzelnen Schichten können eine oder auch mehrere Lagen beziehungsweise Materialbahnen umfassen. Diese Lagen beziehungsweise Materialbahnen sind beispielsweise vollflächig miteinander verbunden.

Die Außenschicht a. weist vorzugsweise eine Dicke in einem Bereich von 40 bis 2000 µm auf. Die Außenschicht ist vorteilhafterweise nicht für UV Strahlung durchlässig, damit das Harz in der harzgetränkten Faserschlauchschicht nicht beispielsweise bei der Lagerung oder beim Transport aushärtet. Die Außenschicht kann beispielsweise aus Polymer oder auch aus einem Vlies mit aufkaschiertem Polymer bestehen. Als Material für Polymer oder Vlies kommen beispielsweise Polyethylen oder Polypropylen in Frage.

Die harzgetränkte Faserschlauchschicht b. kann eine Dicke in einem Bereich von 2 bis 30 mm haben. Die Faserschlauchschicht ist vorzugsweise ein Gelege, ein Gewebe, eine Matte, ein Gestrick, ein Vlies, ein Filz, ein Gewirke oder eine Kombination oder ein mehrlagiger Aufbau dieser textilen Flächengebilde. Das Material der Fasern der harzgetränkten Faserschlauchschicht ist vorzugsweise ausgewählt aus Glas, Carbon, Aramid, gelgesponnenem Polyethylen (beispielsweise Dyneema ®), PAN, thermoplastischem Polymer oder Mischungen derselben. Thermoplastische Fasern können beispielsweise aus Polypropylen, Polyethylen oder Polyester sein. Das Material für das Harz kann ausgewählt sein aus der Gruppe ungesättigter Polyesterharze, Vinylesterharze, Epoxidharze, oder Mischungen derselben.

Die Verankerungsschicht c., die vorzugsweise aus einem thermoplastischen Material besteht, weist Wiederum vorzugsweise eine Dicke in einem Bereich von 10 bis 5000 µm, erfindungsgemäß 30 bis 500 µm auf. Die Verankerungsschicht besteht vorteilhafterweise aus einem Vlies oder einem Schmelzklebstoff oder einer Kombination dieser Varianten. Ganz besonders bevorzugt besteht das Vlies aus Glas, thermoplastischen Materialien, PAN, oder Mischungen derselben. Die thermoplastischen Materialien sind beispielsweise ausgewählt aus Polyethylen, Polypropylen oder Polyester. Der Schmelzklebstoff ist beispielsweise Polyamid, Polyethylen, APAO (amorphes Polyolefin), EVAC (Ethylenvinylacetat-Copolymer), TPE-E (Polyester-Elastomer), TPE-U (Polyurethan-Elastomer), TPE-A (Copolyamid-Elastomer) oder Vinylpyrrolidon/Vinylacetat-Copolymer, sowie Mischungen derselben.

Die innenliegende Polymerschicht d. weist vorteilhafterweise eine Dicke in einem Bereich von 100 bis 1500 µm auf. Insbesondere weist die innenliegende Polymerschicht eine Dicke in einem Bereich von 100 bis 600 µm auf. Dadurch kann diese innenliegende Polymerschicht zum einen vor mechanischen Verletzungen beispielsweise durch das Gerät zur Aushärtung der harzgetränkten Faserschlauchschicht geschützt werden, ist aber andererseits noch dünn genug, um genügend Wärme oder UV-Strahlung für die Aushärtung durchzulassen. Diese innenliegende Polymerschicht weist vorteilhafterweise mehrere Lagen auf. Eine dieser Lagen ist eine Barrierelage. Diese Barrierelage soll die Diffusion von Reaktivverdünnern wie beispielsweise Styrol von unausgehärtetem Harz verhindern. Diese Barrierelage ist vorteilhafterweise eine der Lagen der Polymerschicht, die nicht außen ("außen" meint hier "für den Betrachter sichtbar" und/oder "an die Verankerungsschicht angrenzend") liegt. Die Barrierelage enthält beispielsweise zu wenigstens 50 Gew.% und besteht insbesondere bevorzugt aus Polyamid, Ethylen-Vinylalkohol-Copolymer, PBT, PET, halogenierten Polymeren oder Mischungen derselben. Besonders bevorzugt besteht die Barrierelage aus einem oder mehreren dieser Materialien. Die Barrierelage weist vorteilhafterweise eine Dicke in einem Bereich von 10 bis 500 µm auf.

Die Vorteile der erfindungsgemäßen Barrierelage zeigt sich bei dem Vergleich mit dem Stand der Technik, insbesondere bei dem Vergleich mit Filzlinern, die im Inneren eine fest haftende Schicht aus PE, PP oder PUR aufweisen, welche gegenüber Reaktivverdünnern wie z.B. Styrol keine oder ein ungenügende Sperrwirkung zeigt, da Styrol durch die Beschichtung diffundiert und sich an der Oberfläche anreichert. Dies hat zwei Konsequenzen:
1.) Bei der Härtung mit Warmwasser oder Dampf findet man signifikante Mengen Styrol im Prozesswasser, welches mit erheblichem Aufwand behandelt oder gesondert entsorgt werden muß, um Umweltschäden zu vermeiden.
2.) Bei der Härtung mit UV-Licht ergeben sich gravierende Sicherheitsprobleme, da die untere Explosionsgrenze von Styrol mit Luft binnen weniger Stunden überschritten wird.

Mit der neuen erfindungsgemäßen Barrierelage in der innen liegenden Polymerschicht, die vorzugsweise stoff- oder kraftschlüssig mit dem Liner verbunden ist, ist es erstmalig möglich, mit einem Liner basierten Sanierungsverfahren Rohre umweltfreundlich zu sanieren. Zudem ist es erstmalig möglich, UV-härtbare Harze und Radikalgeneratoren zu verwenden.

In einer alternativen Ausführungsform kann die Polymerschicht auch aus einer Barrierelage bestehen.

Die innenliegende Polymerschicht weist vorteilhafterweise wenigstens eine und vorteilhafterweise zwei außenliegende Lagen ("außen" meint hier "für den Betrachter sichtbar" und/oder "an die Verankerungsschicht angrenzend") aus Polyurethan, Polyethylen oder Polypropylen auf. Diese außen liegende Lage weist vorteilhafterweise eine Dicke in einem Bereich von 50 bis 1000 µm auf. Beispielsweise kann die an die Verankerungsschicht angrenzende außen liegende Lage (beispielsweise als Haftlage) dünner sein als die andere außen liegende Lage, die der Schlauchmitte zugewandt ist (nämlich beispielsweise einer Verschleißlage). Dadurch kann die innenliegende Polymerschicht noch besser vor mechanischen Einflüssen schützen.

Zwischen der innenliegenden Polymerschicht d. und der Verankerungsschicht c. kann beispielsweise noch eine Schicht aus thermoplastischem Polymer wie Polypropylen oder Polyethylen vorgesehen sein. Diese kann beispielsweise extrudiert werden. Vorzugsweise liegt das Molekulargewicht des Materials dieser Schicht unterhalb des Molekulargewichts des Materials der angrenzenden Lage der innenliegenden Polymerschicht, um ein hohes Maß an Fließfähigkeit und damit an Kraftschlüssigkeit zu ermöglichen.

Stoffschlüssig oder kraftschlüssig im Sinne der Erfindung kann vorteilhafterweise bedeuten, dass die jeweiligen Schichten miteinander entweder vollflächig oder teilweise kaschiert, laminiert oder verklebt sind. Falls die Schichten teilweise miteinander verbunden sind, so sind vorzugsweise zumindest 40 % der Fläche der Schichten miteinander verbunden oder alternativ punktuell verbunden. Im Unterschied zum Stand der Technik kann so ein Verrutschen der Schichten gegeneinander vollständig vermieden werden. Die Schichten können zusätzlich oder alternativ auch so verbunden werden, dass ein hochfließfähiges thermoplastisches Material bei der Herstellung zwischen die Schichten extrudiert wird.

Wenigstens die harzgetränkte Faserschlauchschicht ist vorteilhafterweise nicht gewickelt oder übereinandergeschlagen. Vorzugsweise ist keine der Schichten gewickelt oder übereinandergeschlagen. Vielmehr weist wenigstens die harzgetränkte Faserschlauchschicht vorteilhafterweise mindestens eine Längsnaht auf. Wenigstens diese Schicht ist vorteilhafterweise der Länge nach verschweißt, vernäht, gestrickt oder verklebt. Dies hat den besonderen Vorteil, dass ein imprägnierter Faserschlauch mit einer solchen Faserschlauchschicht in Längsrichtung kaum mehr dehnbar ist und sich somit besonders gut für das Inversionsverfahren eignet. Hingegen weist eine gewickelte harzgetränkte Fasermatte den erheblichen Nachteil auf, dass diese beim Einstülpen des Schlauches in ein Rohr bei einem Inversionsverfahren Gefahr läuft, dass die Wickellagen sich verschieben oder einfach auseinander fallen. Wenigstens diese Schicht ist vorteilhafterweise einstückig.

In der harzgetränkten Faserschlauchschicht ist das Harz vorzugsweise nicht oder nur teilweise durchpolymerisiert. In der Zusammensetzung des Harzes sind vorteilhafterweise 0,1 bis 20 Gewichtsanteile eines Eindickmittels und insbesondere eines Isocyanats bezogen auf 100 Gewichtsanteile Harz enthalten. Es hat sich herausgestellt, dass hierdurch in der Anwendung bei der Sanierung von Rohren die Zusammensetzung des Harzes hinreichend eingedickt ist, aber bei der Herstellung flüssig genug ist, um die Verankerungsschicht und die Faserschlauchschicht vollständig zu tränken.

Vorzugsweise befindet sich ganz innen zur Rohrmitte hin eine Schicht aus Polyethylen, Polypropylen oder Polyurethan als außen liegende Lage der innen liegenden Polymerschicht. Daran anschließend befindet sich vorteilhafterweise eine Barrierelage als Lage der innen liegenden Polymerschicht. Vorteilhafterweise kann zwischen der Verankerungsschicht c. und der Barrierelage eine Schicht aus Polyethylen oder Polypropylen als weitere Lage der innen liegenden Polymerschicht vorgesehen sein.

In einer weiteren Ausführungsform wird die der Erfindung zu Grunde liegende Aufgabe gelöst durch ein Verfahren zur Herstellung des erfindungsgemäßen Faserschlauchs, dadurch gekennzeichnet, dass
a) eine Materialbahn der Verankerungsschicht und eine Materialbahn der im Endprodukt innenliegenden Polymerschicht stoffschlüssig oder kraftschlüssig miteinander verbunden wird, und
b) eine Materialbahn der Außenschicht so angeordnet wird, dass sie im Endprodukt ganz außen angeordnet ist, und
c) wenigstens eine der Materialbahnen der Länge nach an den Außenkanten mit oder ohne Überlappung mit mindestens einer Längsnaht verbunden wird.

Vorteilhafterweise werden wenigstens zwei, insbesondere wenigstens drei der Materialbahnen in Schritt c) verbunden. Darunter können beispielsweise zwei Lagen der Faserschlauchschicht sein. Dadurch kann der entstehende Faserschlauch deutlich stabilisiert werden und ist wesentlich besser für ein Inversionsverfahren geeignet. Beispielsweise setzt man bei dem erfindungsgemäßen Verfahren für das Material der einen oder mehreren Lagen der Faserschlauchschicht Glasfasermatten ein.

Zur besseren Verbindung der einzelnen Schichten oder beispielsweise der besseren Verbindung des Glases mit dem Harz können übliche Haftvermittler wie Silane oder das Coronaverfahren eingesetzt werden.

In einer weiteren Ausführungsform wird die der Erfindung zu Grunde liegende Aufgabe gelöst durch ein Verfahren zur Sanierung von Rohren, bei dem ein erfindungsgemäßer Faserschlauch in ein zu sanierendes Rohr eingezogen wird, mit Druckluft an die Rohrinnenwand gedrückt wird, wobei anschließend das Harz der harzgetränkten Faserschlauchschicht ausgehärtet wird.

In einer weiteren Ausführungsform wird die der Erfindung zu Grunde liegende Aufgabe gelöst durch die Verwendung des erfindungsgemäßen Faserschlauchs zur Sanierung von Rohren oder Kanälen.

In einer weiteren Ausführungsform wird die der Erfindung zu Grunde liegende Aufgabe gelöst durch ein saniertes Rohr, das auf der Rohrinnenseite einen ausgehärteten erfindungsgemäßen Faserschlauch aufweist.

### Figurenbeschreibung

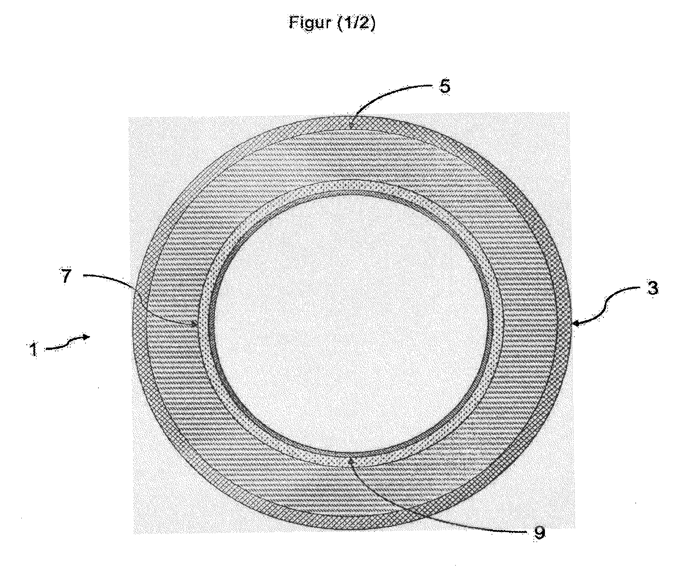

Fig. 1 zeigt einen imprägnierten inversierfähigen Faserschlauch (Liner) 1 zur Innenauskleidung von Kanälen und Rohrleitungen, der folgendes aufweist:
a. eine Außenschicht 3,
b. eine harzgetränkte Faserschlauchschicht 5,
c. eine Verankerungsschicht 7 und
d. eine innenliegende Polymerschicht 9,
und wobei die Verankerungsschicht und die innenliegende Polymerschicht stoffschlüssig oder kraftschlüssig miteinander verbunden sind.

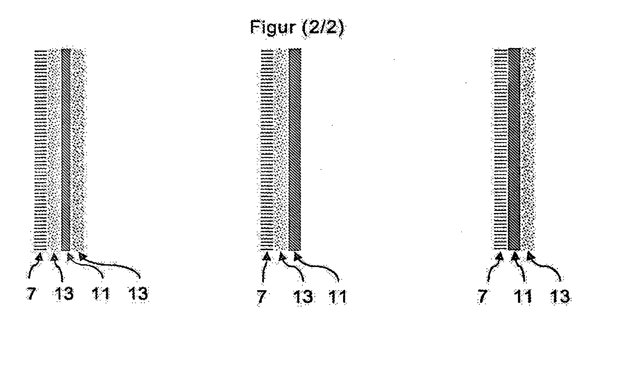

Fig. 2 zeigt verschiedene Varianten, wie die innenliegende Polymerschicht 9 relativ zur Verankerungsschicht 7 aufgebaut sein kann. So kann eine Barrierelage 11 beispielsweise aus PA durch zwei Lagen 13 aus PE, PP oder PU eingeschlossen sein, wobei eine der Lagen 13 an die Verankerungsschicht 7 angrenzt. Alternativ kann die innenliegende Polymerschicht 9 auch einfach aus einer an die Verankerungsschicht angrenzende Lage 13 und eine ganz außen an der Sichtseite liegende Barrierelage 11 gebildet sein. Wiederum alternativ kann die Barrierelage 11 auch an die Verankerungsschicht 7 angrenzen und anschließend innerhalb der innenliegenden Polymerschicht 9 eine außen an der Sichtseite gelegene Lage 13 vorgesehen sein.

### Ausführungsbeispiel

Für die Herstellung des erfindungsgemäßen imprägnierten inversierfähigen Faserschlauchs (Liner) wurde eine 1 m breite und 20 m lange Bahn aus einem 5 mm dicken Glasfasergelege auf der einen Seite mit einer 300 µm dicken Folie aus Polypropylen durch Auflegen versehen, welche später verklebt wurden. Auf der anderen Seite wurde eine zum Schlauch mit einer Längsnaht geschweißte Kombination aus einer 100 µm dicken Schicht aus Polypropylenvlies auf der eine 300 µm Folie aufkaschiert war, die aus drei gleichdicken Lagen Polyethylen, Polyamid und Polyethylen zu jeweils 100 µm bestand, aufgelegt. Anschließend wurden die beiden Längskanten der Glasfasergelege durch Vernähen verbunden, so dass ein 20 m langer erfindungsgemäßer Faserschlauch entstand. Dieser wurde anschließend mit einem marktüblichen UV-initiierten UP-Harz für das Relining unter Vakuum imprägniert. Das Harz enthielt die üblichen Zusatzstoffe wie u.a. Benetzungsadditive, Entlüftungsadditive und Isocyanate zum Eindicken.

### Bezugszeichen

- 1: imprägnierter Faserschlauch (Liner)
- 3: Außenschicht (a.)
- 5: harzgetränkte Faserschlauchschicht (b.)
- 7: Verankerungsschicht (c.)
- 9: innenliegende Polymerschicht (d.)
- 11: Barrierelage, Teil der innenliegenden Polymerschicht
- 13: Lage aus Polymer, Teil der innenliegenden Polymerschicht

## Patentansprüche

1. Imprägnierter Faserschlauch zur Innenauskleidung von Kanälen und Rohrleitungen, der folgendes aufweist:
a. eine Außenschicht,
b. eine harzgetränkte Faserschlauchschicht,
c. eine Verankerungsschicht, und
d. eine innenliegende Polymerschicht mit mindestens einer Barrierelage, und
wobei die Innenliegende Polymerschicht mindestens eine Längsnaht aufweist,
**und wobei die Dicke der Verankerungsschicht in einem Bereich von 30 bis 500 µm liegt.**

2. Faserschlauch gemäß Anspruch 1, **dadurch gekennzeichnet, dass** zumindest die Verankerungsschicht und die innenliegende Polymerschicht stoffschlüssig oder kraftschlüssig miteinander verbunden sind.

3. Faserschlauch gemäß einem der Ansprüche 1 oder 2, **dadurch gekennzeichnet, dass** die kraftschlüssige oder stoffschlüssige Verbindung eine Kaschierung, Laminierung oder Verklebung ist.

4. Faserschlauch gemäß einem der Ansprüche 1 bis 3, **dadurch gekennzeichnet, dass** die stoffschlüssige oder kraftschlüssige Verbindung vollflächig ist.

5. Verfahren zur Herstellung des Faserschlauchs gemäß einem der Ansprüche 1 bis 4, **dadurch gekennzeichnet, dass**
a) eine Materialbahn der Verankerungsschicht und eine Materialbahn der im Endprodukt innenliegenden Polymerschicht stoffschlüssig oder kraftschlüssig miteinander verbunden werden, und
b) eine Materialbahn der Außen-schicht so angeordnet wird, dass sie im Endprodukt ganz außen angeordnet Ist, und
c) wenigstens eine der Materialbahnen der Länge nach an den Außenkanten mit oder ohne Überlappung mit mindestens einer Längsnaht verbunden wird.

6. Verfahren gemäß Anspruch 5, **dadurch gekennzeichnet, dass** wenigstens zwei, insbesondere wenigstens drei der Materialbahnen In Schritt c) verbunden werden.

7. Verfahren zur Sanierung von Rohren, bei dem ein Faserschlauch gemäß einem der Ansprüche 1 bis 4 in ein zu sanierendes Rohr eingezogen wird, mit Druckluft an die Rohrinnenwand gedrückt wird, wobei anschließend das Harz der harzgetränkten Faserschlauchschicht ausgehärtet wird.

8. Verwendung des Faserschlauchs gemäß einem der Ansprüche 1 bis 4 zur Sanierung von Rohren oder Kanälen.

9. Saniertes Rohr, das auf der Rohrinnenseite einen ausgehärteten Faserschlauch gemäß einem der Ansprüche 1 bis 4 aufweist.

## Claims

1. Impregnated fiber tube for internally lining conduits and pipes, said fiber tube comprising:
a. an outer layer,
b. a resin-impregnated fiber tube layer,
c. an anchoring layer, and
d. an inner polymer layer including at least one barrier ply, and
wherein the inner polymer layer comprises at least one longitudinal seam,
**and wherein the thickness of the anchoring layer is within a range of 30 to 500 µm**

2. Fiber tube according to claim 1, **characterized in that** at least the anchoring layer and the inner polymer layer are connected with each other by a substance-to-substance connection or non-positively.

3. Fiber tube according to one of claims 1 or 2, **characterized in that** the non-positive or substance-to-substance connection is a layup, lamination or adhesive bond.

4. Fiber tube according to one of claims1 to 3, **characterized in that** the substance-to-substance or non-positive connection is provided over the entire surface.

5. Method of manufacturing the fiber tube according to one of claims 1 to 4, **characterized in that**
a) a material sheet of the anchoring layer and a material sheet of the inner polymer layer of the end product are connected with each other by a substance-to-substance connection or non-positively, and
b) a material sheet of the outer layer is arranged such that it is located at an outermost position in the end product, and
c) at least one of the material sheets is longitudinally connected at the outer edges with or without overlapping by at least one longitudinal seam.

6. Method according to claim 5, **characterized in that** at least two, more preferably at least three of the material sheets are connected with each other in step c).

7. Method of rehabilitating pipes, **characterized in that** a fiber tube according to one of claims 1 to 4 is inserted into a pipe to be rehabilitated, pressed with compressed air against the inner wall of the pipe, wherein the resin of the resin-impregnated fiber tube layer subsequently hardens.

8. Use of the fiber tube according to one of claims 1 to 4 for rehabilitating pipes or conduits.

9. Rehabilitated pipe which comprises a hardened fiber tube according to one of claims 1 to 4 at the inner surface of the pipe.

## Revendications

1. Tube de fibres imprégné pour le chemisage interne de canaux et canalisations, comprenant:
a. une couche extérieure,
b. une couche de tube de fibres imprégnée de résine,
c. une couche d'ancrage, et
d. une couche de polymère interne ayant au moins une couche barrière, et
dans lequel la couche de polymère interne comporte au moins un joint longitudinal,
et dans lequel l'épaisseur de la couche d'ancrage est dans une plage de 30 à 500 µm.

2. Tube de fibres selon la revendication 1, **caractérisé en ce qu'**au moins la couche d'ancrage et la couche de polymère interne sont reliées l'une à l'autre par adhérence ou par frottement.

3. Tube de fibres selon la revendication 1 ou 2, **caractérisé en ce que** la liaison par frottement ou par adhérence est un entoilage, un laminage ou un collage.

4. Tube de fibres selon l'une des revendications 1 à 3, **caractérisé en ce que** la liaison par adhérence ou par frottement est sur toute la surface.

5. Procédé de fabrication du tube de fibres selon l'une des revendications 1 à 4, **caractérisé en ce que**
a) une bande de matériau de la couche d'ancrage et une bande de matériau de la couche de polymère interne dans le produit fini sont reliées l'une à l'autre par adhérence ou par frottement, et
b) une bande de matériau de la couche extérieure est disposée de telle sorte qu'elle se trouve entièrement à l'extérieur dans le produit fini, et
c) au moins l'une des bandes de matériau est reliée longitudinalement sur les bords extérieurs, avec ou sans chevauchement, avec au moins un joint longitudinal.

6. Procédé selon la revendication 5, **caractérisé en ce qu'**au moins deux, en particulier au moins trois des bandes de matériau à l'étape c) sont reliées.

7. Procédé pour assainir des tuyaux, selon lequel un tube de fibres selon l'une des revendications 1 à 4 est inséré dans un tuyau à assainir, est appuyé contre la paroi intérieure du tuyau à l'aide d'air comprimé, de telle sorte que la résine de la couche de tube de fibres imprégnée de résine est ensuite durcie.

8. Utilisation du tube de fibres selon l'une des revendications 1 à 4, pour assainir des tuyaux ou des canaux.

9. Tuyau assaini, qui présente sur la face intérieure de tuyau un tube en fibres durci selon l'une des revendications 1 à 4.
